# EUROPEAN PATENT APPLICATION

(11) **EP 4 650 626 A1**
(43) Date of publication of application: **19.11.2025**
(21) Application number: 25173898.5
(22) Date of filing: 02.05.2025
(51) Int. Cl.: F16J 15/00, F16J 15/3204, F16J 15/3284, F16J 15/3296, B63H 25/46

(54) **SEALING ASSEMBLY AND RETRACTABLE THRUSTER SYSTEM THEREFOR**

(30) Priority: 14.05.2024 FI 20245608
(71) Applicant: Steerprop Oy, 26101 Rauma (FI)
(72) Inventor: Jerne, Alexander, 26101 Rauma (FI); Ojamaa, Esko, 26101 Rauma (FI)
(74) Representative: Moosedog Oy

(57) **Abstract**

Disclosed is a sealing assembly (100) for a stem tube (206) implemented in a retractable thruster system (200) and the retractable thruster system therefor. The sealing assembly comprises an annular sealing housing (102). The annular sealing housing comprising a first sealing layer (110), arranged at an opening (104) of the annular sealing housing, configured to prevent marine growth and fluid ingress, a second sealing layer (120), arranged after the first sealing layer, configured to form a water-tight seal against the stem tube, a third sealing layer (130), arranged after the second sealing layer, configured to accommodate relative movement of the stem tube, a fourth sealing layer (140), arranged between the first sealing layer and the second sealing layer, configured to be inflated for providing a temporary sealing barrier; and a drainage channel (150), arranged between the first sealing layer and the second sealing layer, configured to provide a dedicated path for removal of fluid ingress from the annular sealing housing.

## Description

### TECHNICAL FIELD

The present disclosure relates to sealing systems in marine applications. Specifically, the present disclosure relates to a sealing assembly for a stem tube implemented in a retractable thruster system. Moreover, the present disclosure also relates to a retractable thruster system.

### BACKGROUND

In recent times, with an advent in technology, researchers are continuously developing solutions for sealing the stem tubes in retractable thruster systems. However, current technologies have several limitations and fail to provide a reliable sealing as determined by ongoing research and stakeholder engagements.

While sealing technology for rotating shafts in maritime applications has been well-established for many years, challenges to accommodate vertically translating shafts still persists, for example, seawater ingress into machinery room of marine vehicles, causing increased risk of rust formation and presents potential for occupational (e.g., slip-and-fall) hazards. Further, marine growth and debris gradually damages the stem tube surfaces, creating microscopic channels that allow fluids to bypass the conventional sealing solutions, causing accelerated degradation and further compromising the efficacy of the sealing solution.

Several attempts have been made to overcome the aforementioned problems, primarily focused on either improvement of the seals themselves or adoption of additional layers to the sealing assembly or system. However, such attempts contribute to an increased maintenance, material and labour (assembly) costs and simultaneously, reduces the durability or lifetime thereof.

Therefore, in light of the foregoing discussion, there exists a need to overcome the aforementioned drawbacks associated with existing braking devices, arrangements, or systems and provide an improved, cost-effective, reliable and efficient sealing assembly and retractable thruster system therefor.

### SUMMARY

The present disclosure seeks to provide a sealing assembly for a stem tube implemented in a retractable thruster system. The present disclosure also seeks to provide a retractable thruster system. An aim of the present disclosure is to provide a solution that overcomes at least partially the problems encountered in prior art.

In one aspect, an embodiment of the present disclosure provides a sealing assembly for a stem tube implemented in a retractable thruster system, the sealing assembly comprising:
- an annular sealing housing, arranged concentrically in a floating manner to enable radial movement, around the stem tube, comprising:
   - a first sealing layer, arranged at an opening of the annular sealing housing, configured to prevent marine growth and fluid ingress;
   - a second sealing layer, arranged after the first sealing layer, configured to form a water-tight seal against the stem tube;
   - a third sealing layer, arranged after the second sealing layer, configured to accommodate relative movement of the stem tube;
- a fourth sealing layer, arranged between the first sealing layer and the second sealing layer, configured to be inflated for providing a temporary sealing barrier; and
   - a drainage channel, arranged between the first sealing layer and the second sealing layer, configured to provide a dedicated path for removal of fluid ingress from the annular sealing housing.

In another aspect, an embodiment of the present disclosure provides a retractable thruster system, comprising:
- a thruster assembly;
- a driver assembly;
- a stem tube operatively coupled with the thruster assembly (202) and the driver assembly; and
- a sealing assembly as claimed in any one of the preceding claims.

Embodiments of the present disclosure substantially eliminate or at least partially address the aforementioned problems in the prior art and provide an optimized, safe, reliable, and effective sealing assembly and retractable thruster system.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, elements have been indicated by identical numbers.

Embodiments of the present disclosure will now be described, by way of example only, with reference to the following diagrams wherein:
- FIG. 1A: is an exemplary a cross-sectional view of a sealing assembly for a stem tube implemented in a retractable thruster system, in accordance with one or more embodiments of the present disclosure;
- FIGs. 1B and 1C: illustrate top and cross-sectional views, respectively, of the sealing assembly 100 of FIG. 1A, in accordance with one or more embodiments of the present disclosure;
- FIG. 2: illustrates an exemplary block diagram of a retractable thruster system implementing the sealing system, in accordance with one or more embodiments of the present disclosure;
- FIGs. 3A and 3B: illustrate cross-sectional views of the annular sealing housing of the sealing assembly with respect to the axes B-B, and C-C, respectively, in accordance with one or more embodiments of the present disclosure; and
- FIGs. 4A and 4B: illustrate an exemplary schematic diagram of an exemplary retractable thruster system 200 in different positional configurations, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In a first aspect, the present disclosure provides a sealing assembly 100 for a stem tube implemented in a retractable thruster system, the sealing assembly comprising:
- an annular sealing housing, *arranged concentrically in a floating manner to enable radial movement,* around the stem tube, comprising:
   - a first sealing layer, arranged at an opening of the annular sealing housing, configured to prevent marine growth and fluid ingress;
   - a second sealing layer, arranged after the first sealing layer, configured to form a water-tight seal against the stem tube;
   - a third sealing layer, arranged after the second sealing layer, configured to accommodate relative movement of the stem tube;
   - a fourth sealing layer, arranged between the first sealing layer and the second sealing layer, configured to be inflated for providing a temporary sealing barrier; and
   - a drainage channel, arranged between the first sealing layer and the second sealing layer, configured to provide a dedicated path for removal of fluid ingress from the annular sealing housing.

In a second aspect, the present disclosure further provides a retractable thruster system, comprising:
- a thruster assembly;
- a driver assembly;
- a stem tube operatively coupled with the thruster assembly and the driver assembly; and
- a sealing assembly of the first aspect.

In a first aspect, the present disclosure provides a sealing assembly for a stem tube (the stem tube might be also called rudder tube) implemented in a retractable thruster system. The sealing assembly is configured to create a watertight (or leak-proof) barrier between the stem tube and the retractable thruster system (housing) in order to prevent water ingress during operation (i.e., when retracted) and protect internal components of the retractable thruster system and/or marine vehicle(s) utilizing the retractable thruster system. The term "sealing assembly", as used herein, refers to a system of multiple mechanical components specifically designed and arranged to create a leak-proof barrier around the stem tube within the retractable thruster system. For example, the sealing assembly includes sealing elements (such as, O-rings, piston rings, lip seals, gaskets, etc.), sealing housing, packing (or filler), and other mechanical components required for forming the sealing assembly. Typically, the sealing assembly is configured to prevent ingress (entry) of external fluids or gases into the retractable thruster system, and vice versa, during operation. It will be appreciated that the specific design of the sealing assembly is dependent upon the shape and dimensions of the stem tube in order to accommodate the movement thereof and, in an embodiment, is configured to flexible, or have components that allow for smooth extension and retraction, without compromising the sealing function of the sealing assembly.

Conventional sealing solutions for stem tubes of retractable thruster systems, as determined by ongoing research and stakeholder engagements, have several limitations and therefore fail to provide a reliable sealing. While sealing technology for rotating shafts in maritime applications has been well-established for many years, challenges to accommodate vertically translating shafts still persists, for example, seawater ingress into machinery room of marine vehicles, causing increased risk of rust formation and presents potential for occupational (e.g., slip-and-fall) hazards. Further, marine growth and debris gradually damages the stem tube surfaces, creating microscopic channels that allow fluids to bypass the conventional sealing solutions, causing accelerated degradation and further compromising the efficacy of the sealing solution.

Several attempts have been made to overcome the aforementioned problems, primarily focused on either improvement of the seals themselves or adoption of additional layers to the sealing assembly or system. However, such attempts contribute to an increased maintenance, material and labour (assembly) costs and simultaneously, reduces the durability or lifetime thereof. Thus, in light of the foregoing discussion, a dire need for an improved, cost-effective and durable sealing assembly to overcome the aforementioned limitations is developed.

The sealing assembly comprises an annular sealing housing, arranged concentrically in a floating manner to enable radial movement, around the stem tube. The *"sealing housing"* refers to the main housing (or body) of the sealing assembly configured to accommodate (or house) internal components thereof. Alternatively stated, the annular sealing housing is configured for encasing seals around the stem tube for a tight fit and effective fluid (or water) management. The sealing housing comprises an annular (or ring-shaped) body arranged concentrically around the stem tube implemented within the retractable thruster system. For example, the sealing housing (or assembly) is configured to fit around a base of the stem tube i.e., at the point meeting the main body (housing) of the retractable thruster system. Notably, the sealing assembly is arranged in a floating manner around the stem tube to accommodate relative radial movement of the stem tube. Alternatively stated, the floating design of the annular sealing housing enables a certain degree of controlled radial movement (i.e., inward or outward) relative to the stem tube. It will be appreciated that the shape of the sealing housing is cylindrical; However, some modifications to the annular sealing housing, or shape thereof, may be made without any limitations to the present disclosure. In an example, at least one flange(s) may be provided at each, or either, end of the annular sealing housing for secure fixation with a bottom well cover (or closure) of the retractable thruster system. In another example, internal grooves or channels may be machined into the annular sealing housing to facilitate drainage. In yet another example, the annular sealing housing may comprise tapered ends to aid insertion or removal during maintenance procedures.

The annular sealing housing comprises a first sealing layer, arranged at an opening of the annular sealing housing, configured to prevent marine growth and fluid ingress. The term *"sealing layer"* as used herein refers to one or more sealing components configured to generate a barrier (or seal) against unwanted leakage or intrusion. Alternatively stated, the sealing layer is configured to prevent the passage of a substance (liquid, gas, or even solid particles) from one area (e.g., surroundings) to another (e.g., annular sealing housing) in order to maintain the integrity and functionality of the retractable thruster system. For example, the sealing layer includes at least one of a lip seal, an O-ring, a scraper seal, a gasket, etc. The first sealing layer is arranged at the opening of the annular sealing housing in order to act as the primary sealing element of the sealing assembly and prevent marine growth and ingress. Specifically, the first sealing layer acts as a barrier to stop the accumulation of marine growth such as, barnacles, mussels, etc., on the inner surface(s) of the annular sealing housing or the stem tube and simultaneously prevents seawater, or other fluids, from entering through the opening of annular sealing housing by maintaining a water-tight seal against the stem tube.

In one or more embodiments, the first sealing layer includes a scraper seal, and wherein the scraper seal is made using at least one of Polyurethanes, Ultra-High Molecular Weight Polyethylene (UHMWPE), a metal having wear-resisting coating. Notably, the scraper seal of the first sealing layer is made entirely from one of the above materials, or may be made from a combination thereof. For example, the scraper seal may be made of a Polyurethane (PU) core with a UHMWPE wear surface.

The annular sealing housing further comprises a second sealing layer, arranged after the first sealing layer, configured to form a water-tight seal against the stem tube. The second sealing layer is arranged after (or behind) the first sealing layer in order to provide a secondary (or additional) barrier, along with the first sealing layer (or primary barrier), for enhanced reliability and security. The second sealing layer is configured to generate a water-tight seal against the stem tube to ensure prevention, or at least minimization, of water leakage between the annular sealing housing and the stem tube.

In one or more embodiments, the second sealing layer includes a multi-layered chevron seal. The second sealing layer includes a multi-layered chevron seal having a V-shaped (or wedged) profile i.e., facing outwards towards incoming fluid pressure, such that when incoming fluid ingress comes in contact (or pushes) against the second sealing layer, a 'wedging effect' is generated and beneficially, forces the second sealing layer against the stem tube to form an effective and durable seal. Herein, the second sealing layer with the multi-layered chevron seal provides multiple layers of sealing elements (lips or protrusions) to provide additional redundancy and improve sealing performance of the sealing assembly. Such an implementation of the multi-layered chevron seal in the second sealing layer enables provision of a robust and reliable water-tight sealing barrier(s) between the annular sealing housing of the sealing assembly and the stem tube implemented in the retractable thruster system.

In one or more embodiments, the second sealing layer comprises a plurality of internal seals configured to allow one or more of the plurality of internal seals to be replaced while remaining of the plurality of internal sealing layers are operational. Typically, the second sealing layer incorporates the plurality of internal seals to enable (or allow) selective replacement of one or more seals of the plurality of seals within the second sealing layer. In an exemplary scenario of a maintenance operation, wherein the plurality of seals of the second sealing layer includes three seals (A, B, and C), one or more seals (A, or B, or A and B) may be replaced while the remaining seals (B and C, or A and C, or C) are operational. Alternatively stated, the one or more seals of the plurality of seals may be swapped out while the other remaining of the plurality of seals remain fully operational to allow faster and efficient maintenance of the sealing assembly. Additionally, such an implementation minimizes down-time (or inoperable period) owing to the sealing assembly remains functioning (or operational) even during the replacement or maintenance process for improving both maintainability and cost-effectiveness.

In one or more embodiments, each of the plurality of internal seals of the second sealing layer comprises at least two protruded lips (X, Y) having a height (h) and separated by a distance (d) to accommodate incoming protruded lips of one or more internal seals of the plurality of internal seals in order to form an interlocking seal configuration. The term "interlocking" (also, referred to as puzzle-cut) as used herein refers to the physical configuration associated with each of the plurality of internal seals of the second sealing layer. The second sealing layer utilizes an arrangement of internal seals having a puzzle-cut configuration to form a robust and reliable sealing barrier. Herein, each of the plurality of internal seals comprises at least two protrusions (or indentations) on either side(s), or end(s), wherein each protrusion has a height 'h' and separated by a distance 'd'. In an example, the height 'h' of each of the at least two protrusions is in a range of 1 centimetre (cm) to 10 cm, and the distance 'd' of separation therebetween is in a range of 0 cm to 5 cm , such that a gap may be formed therebetween for accommodating incoming protruded lips of one or more internal seals of the plurality of internal seals. Notably, the specific stacking or arrangement of the plurality of internal seals forms the interlocking configuration to enable provision of a secure and leak-proof sealing via the sealing assembly. It will be appreciated that the shape and size of the second sealing layer is primarily defined by the specific arrangement of the plurality of internal seals and shape thereof and may be varied (for example, a U-shaped profile, a V-shaped profile, etc.) based on the implementation without any limitations to the present disclosure. Optionally, the interlocking configuration of the second sealing layer may be provided by offset-stacking i.e., each of the plurality of internal seals has a unique puzzle-cut design (or shape) based on the position thereof within the second sealing layer. In an exemplary scenario, top and bottom layers are shaped differently (for example, having a single opening) from middle layer(s) (for example, having two openings). Moreover, optionally, the interlocking configuration of the second sealing layer may be provided by offset-rotation of one or more of the plurality of internal seals, or the at least two protrusions thereof, by a predefined angle. For example, the predefined angle may be in a range of 30 degrees to 60 degrees. Such an arrangement of the plurality of internal seals ensures that the at least two protrusions (or cuts) of each layer are not aligned when stacked to create a comprehensive and strong interlocking pattern.

Optionally, each of the plurality of internal seals of the second sealing layer has a modular design with interlocking features on each, or either, end thereof. The modular second sealing layer allows any two seals, irrespective of position within the second sealing layer, to be assembled seamlessly owing to the interchangeable (or modular) nature of the plurality of internal seals.

Conventionally, during operation, retractable thruster system(s) may generate (thruster) vibrations that potentially causes the stem tube to be displaced (or moved) within the annular sealing housing. Further, temperature fluctuations also causes materials of the stem tube and/or the annular sealing housing to expand or contract at different rates, and such differences in thermal expansion potentially caused relative movement therebetween. Thus, in order to overcome the aforementioned problem, the annular sealing housing further comprises a third sealing layer, arranged after the second sealing layer, configured to accommodate relative movement of the stem tube. The third sealing layer is arranged after the first and second sealing layers and acts as the final barrier of the sealing assembly. Notably, the first and second sealing layers are primarily configured to form water-tight or leak-proof sealing barriers within the sealing assembly, while the third sealing layer is configured for, along with the barrier formation, accommodating relative movement between the stem tube and the annular sealing housing of the sealing assembly.

In an embodiment, the third sealing layer includes a lip seal. Specifically, to accommodate the relative movement of the stem tube affecting performance of conventional solutions, the third sealing layer of the annular sealing housing includes the lip seal operable to be compressed against mating surface(s) in order to offer some axial movement of the stem tube while maintaining an effective seal against fluid leakage. In essence, the sealing housing with the lip seal in the third sealing layer ensures a robust and adaptable solution for the retractable thruster system that provides a watertight seal while also accommodating the inevitable movement caused by thruster vibrations and thermal expansion or contraction of the components thereof, or the sealing assembly.

The annular sealing housing further comprises a fourth sealing layer, arranged between the first sealing layer and the second sealing layer, configured to be inflated for providing a temporary sealing barrier. The fourth sealing layer is strategically arranged (or positioned) between the first sealing layer and the second sealing layer and acts as a supplementary barrier during operation. In an example, the fourth sealing layer includes an inflatable seal configured to be inflated to create the temporary sealing barrier, such as, during maintenance of the sealing assembly. Beneficially, the inflation capability of the fourth sealing layer provides an additional layer of security whenever required and improves flexibility of the sealing assembly, while achieving an enhanced sealing performance. It will be appreciated that the inflation mechanism may be varied based on implementational requirements and may be varied without any limitations.

In one or more embodiments, the fourth sealing layer is connected to an inflatable channel for transferring fluid therefrom, and wherein the transferred fluid includes at least one of compressed air, a fluid lubricant. Typically, the inflatable channel acts as an internal pipeline (or passage) configured for transferring fluid to inflate the fourth sealing layer, wherein the transferred fluid may be a compressed gas such as, but not limited to, compressed air, oxygen, nitrogen, carbon-dioxide, and so forth. Optionally, a fluid lubricant may also be transferred for lubricating moving parts or components of the annular sealing housing. Overall, the ability of the sealing assembly to utilize compressed air, or a lubricant, for inflation adds another layer of versatility to the fourth sealing layer. Such an implementation of the inflatable channel allows the system to be tailored to specific needs, offering enhanced sealing security, or lubrication, depending on the situation.

The annular sealing housing further comprises a drainage channel, arranged between the first sealing layer and the second sealing layer, configured to provide a dedicated path for removal of fluid ingress from the annular sealing housing. The term "drainage channel" as used herein refers to a customized pathway or channel configured for capture and/or remove any fluid ingress (such as, caused by environmental factors, or minor leaks) that might bypass the first sealing layer and/or the second sealing layer. The drainage channel is strategically positioned between he first and second sealing layer to allow effective management i.e., collection and removal, of any fluid ingress within the annular sealing housing. Beneficially, the provision of the drainage channel within the annular sealing housing enables prevention of fluid accumulation within the sealing housing and minimizes risk of potential leaks to the external environment in order to improve the effectiveness and operational efficiency of the sealing assembly. Optionally, the drainage channel may include a sloped pathway, a straight pathway, a curved pathway, or a combination thereof, wherein the exact shape of the drainage channel may be varied to meet the implementational requirements while ensuring minimization of the physical footprint of the sealing assembly or housing.

In one or more embodiments, the annular sealing housing comprises a cylindrical structure having an inner radial side and an outer radial side, such that at least one of the first sealing layer, the second sealing layer, and the third sealing layer, are implemented in conjunction with the inner radial side of the sealing housing and along the outer circumference of the stem tube.

In one or more embodiments, the sealing assembly further comprises a collection tank, mechanically coupled with the drainage channel, configured to collect the fluid ingress therein. The term *"collection tank"* refers to a dedicated container configured to accumulate any drained fluids captured via the drainage channel. The collection tank is strategically positioned at a suitable depth (such as, in a machine room associated with the retractable thruster system) for passive discharge leveraging draught height in order to act as a natural reservoir for the potential fluid ingress collected via the drainage channel. For example, fluid ingress collected from, minor leaks past the sealing layer(s), or condensation within the annular sealing housing owing to temperature fluctuations, and external water intrusion, etc. Moreover, the presence of fluid(s) in the collection tank also indicates potential seal deterioration, or leaks, within the sealing assembly. In operation, the collection tank utilizes the pressure difference between internal environment of the collection tank and the external (or surrounding) environment i.e., seawater, for passive removal of leaked fluids while minimizing the complexity of the sealing assembly. Herein, the collection tank provides a centralized location for efficient fluid collection and enables effective monitoring and maintenance of the sealing assembly in a cost-effective and simple manner. It will be appreciated that the location, type, shape, and size (or capacity) of the collection tank is varied based on the implementational requirements without any limitations to the present disclosure.

In one or more embodiments, the sealing assembly further comprises a discharge system, operatively coupled with the collection tank, configured to pump the fluid ingress from the collection tank. The sealing assembly primarily utilizes the pressure difference between the internal and external environments of the sealing assembly; However, if layout or space limitations restrict strategic placement of the collection tank at a suitable depth, the (active) discharge system is also utilized with the collection tank to pump the fluid ingress therefrom. The discharge system may include a pump, a piping arrangement, a check valve, an outlet, and the like.

In one or more embodiments, the sealing assembly further comprises a monitoring system operatively coupled with one or more sensors arranged on, or within, the annular sealing housing, and configured to monitor at least one of a pressure level within the annular sealing housing, or a fluid level within the collection tank. The term "monitoring system" as used herein refers to an arrangement of one or more mechanical, electronic, software, and firmware components configured to monitor at least the pressure level and the fluid level within the annular sealing housing. For example, the monitoring system includes a processor, a memory, the one or more sensors, a communication interface, and the like.

Typically, the monitoring system is operatively coupled with the one or more sensors, wherein each sensor is strategically arranged on, or within, the annular sealing housing to enable effective and accurate measurement via the one or more sensors. Specifically, the one or more sensors includes at least one pressure sensor (for example, a pressure transducer) configured to measure a current pressure level within the annular sealing housing, and at least one fluid level sensor (for example, a float switch, or an ultrasonic sensor). It will be appreciated that other types of sensors such as, temperature sensors for temperature fluctuations within the sealing assembly, and positional sensors for monitoring relative movement of the stem tube, may be utilized by the monitoring system without any limitations to the present disclosure. The sensed data i.e., the detected pressure and fluid levels within the annular sealing housing, is thereby dynamically processed via the monitoring system to generate smart suggestions or valuable insights into the operational status of the sealing system. Beneficially, the implementation of the monitoring system with the sealing assembly enables enhanced dynamic control of the sealing assembly in order to allow proactive maintenance and adjustments, potentially improving the sealing performance and lifespan of the sealing assembly.

In one or more embodiments, the sealing assembly further comprises at least two locating ring seals, arranged simultaneously, configured to maintain radial alignment of the annular sealing housing with respect to the stem tube. The at least two location rings are arranged simultaneously to ensure precise radial alignment of the annular sealing housing with respect to the stem tube for proper functioning of the sealing assembly and minimizing potential leaks and wear associated therewith. Typically, the at least two locating ring seals have a specific design that allows fitting into grooves or machined surfaces on both the annular sealing housing and the stem tube. Herein, the at least two locating ring seals act like a buffer for preventing any excessive radial movement therebetween while still allowing for axial movement (movement along the length of the stem tube). Beneficially, maintaining the radial alignment via the at least two locating ring seals enables improvement of the overall stability of the sealing assembly and also, potentially reducing thruster vibrations to improve sealing performance. Additionally, precise alignment of the annular sealing housing with respect to the stem tube ensures an even (or uniform) distribution of acting forces (or stress) on the sealing assembly, thereby extending lifespan and improving durability thereof.

The present disclosure also provides a retractable thruster system. The various embodiments and variants disclosed above apply mutatis mutandis to the present retractable thruster system without any limitations.

In a second aspect, the embodiments of the present disclosure further provide a retractable thruster system. The "retractable thruster system" refers to a specialized thruster unit designed for controlled manoeuvring of marine vehicles such as, but not limited to, ships, submarines, boats, etc.

The retractable thruster system comprises a thruster assembly (202). The "thruster assembly" refers to a propulsion unit (or mechanism) of the retractable thruster system and configured to generate a thrust for propulsion or manoeuvring of the marine vehicle. The thruster assembly may include at least one of a propellor, an impeller, or any other suitable component required for generating the required thrust. It will be appreciated that the thruster assembly may include multiple thrusters strategically positioned to generate thrust in any given direction for provision of improved control and manoeuvrability of the associated marine vehicle.

The retractable thruster system further comprises a driver assembly (204). The "driver assembly" refers to power unit of the retractable thruster system configured to provide power (energy or force) required to operate the thruster assembly. The driver assembly may include an electric motor, a hydraulic system, a pneumatic system, or any other suitable driving mechanism depending upon the specific implementation requirements. Optionally, the driver assembly includes the main driver assembly, such as, for a primary (or main) thruster assembly. Optionally, the driver assembly includes a secondary driver assembly, such as, for a side thruster assembly.

The retractable thruster system further comprises a stem tube (206) operatively coupled with the thruster assembly (202) and/or the driver assembly (204). The stem tube is operatively coupled with the thruster assembly and/or the driver assembly to enable operation of the retractable thruster system. The stem tube is operable to act as a protective housing for the thruster assembly and potentially, the driver assembly, while providing a structural element to the thruster assembly for enabling effective extension, or retraction, during operation. Overall, the retractable thruster system offers a versatile and efficient solution for underwater manoeuvring. The combination of a powerful thruster assembly, a reliable driver assembly, and a retractable stem tube allows for controlled movement, improved efficiency, and protection of the retractable thruster system.

The retractable thruster system further comprises a sealing assembly of the first aspect. The sealing assembly generates an effective water-tight (or leak-proof) sealing barrier around the stem tube and prevents fluid ingress into the annular sealing housing. Additionally, the sealing assembly minimizes potential fluid ingress around the thruster assembly when extended during operation. The robust and enhanced sealing assembly ensures maintenance of the integrity of the retractable thruster system during operation by preventing fluid ingress and simultaneously, maintaining the operational efficiency to provide a reliable and leak-proof retractable thruster system.

In an embodiment, the sealing assembly is detachably coupled with a closure plate. The *"closure plate"* (or bottom-well cover) refers to a covering plate configured to provide an additional sealing layer (or barrier) for preventing fluid ingress into the internal compartments of the marine vehicle implementing the retractable thruster system, while the stem tube is retracted. The closure plate may be made of a metal, a polymer, or an alloy. For example, the closure plate may be made of steel, or aluminium. The sealing assembly is detachably coupled, for example, via fasteners, for allowing efficient inspection, removal and reattachment of the sealing assembly, or components thereof.

In another embodiment, the sealing assembly is separated from the closure plate via a gap (O) to accommodate horizontal translation of the stem tube. During operation, the stem tube may be required to move horizontally with respect to the annular sealing housing of the sealing assembly. Thus, to accommodate a degree of relative movement of the stem tube, the sealing assembly, or the annular sealing housing, is separated via the gap for providing sufficient manoeuvrability to the stem tube during operation. For example, the length and/or width of the gap may be in a range of 1 cm to 10 cm. Beneficially, such a gap enables arrangement of the annular sealing housing in a "floating manner" while maintaining the overall sealing functionality of the sealing assembly. It will be appreciated that the shape and size of the gap is dependent upon the required degree of horizontal movement of the stem tube and may be varied based on the implementational requirements without any limitations.

Modifications to embodiments of the present disclosure described in the foregoing are possible without departing from the scope of the present disclosure as defined by the accompanying claims. Expressions such as "including", "comprising", "incorporating", "have", and "is" used to describe, and claim the present disclosure are intended to be construed in a non-exclusive manner, namely allowing for items, components, or elements not explicitly described also to be present. Reference to the singular is also to be construed to relate to the plural. The word "exemplary" is used herein to mean "serving as an example, instance, or illustration". Any embodiment described as "exemplary" is not necessarily to be construed as preferred or advantageous over other embodiments or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

### DETAILED DESCRIPTION OF THE DRAWINGS

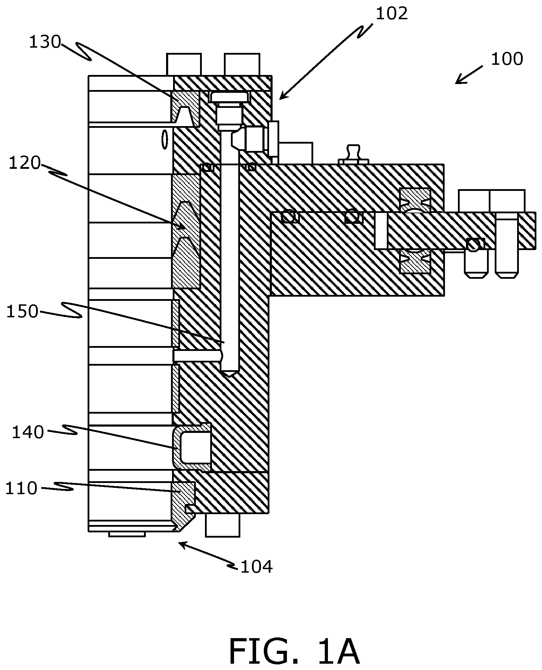

Referring to FIG. 1A, illustrated is a cross-sectional view of a sealing assembly 100 for a stem tube implemented in a retractable thruster system, in accordance with one or more embodiments of the present disclosure. As shown, the sealing assembly 100 comprises an annular sealing housing 102, *arranged concentrically in a floating manner to enable radial movement,* around the stem tube (not shown). The annular sealing housing 102 comprises a first sealing layer 110, arranged at an opening 104 of the annular sealing housing 102, configured to prevent marine growth and fluid ingress. The annular sealing housing 102 further comprises a second sealing layer 120, arranged after the first sealing layer 110, configured to form a water-tight seal against the stem tube. The annular sealing housing 102 further comprises a third sealing layer 130, arranged after the second sealing layer 120, configured to accommodate relative movement of the stem tube. The annular sealing housing 102 further comprises a fourth sealing layer 140, arranged between the first sealing layer 110 and the second sealing layer 120, configured to be inflated for providing a temporary sealing barrier. The annular sealing housing 102 further comprises a drainage channel 150, arranged between the first sealing layer 110 and the second sealing layer 120, configured to provide a dedicated path for removal of fluid ingress from the annular sealing housing 102. It will be appreciated by a person skilled in the art that other components of the sealing assembly are not exemplified for the sake of simplicity and brevity of the present disclosure and any variety of components, for example, fasteners, fillers, sealing elements, etc., may be utilized by the sealing assembly 100 without any limitations to the present disclosure.

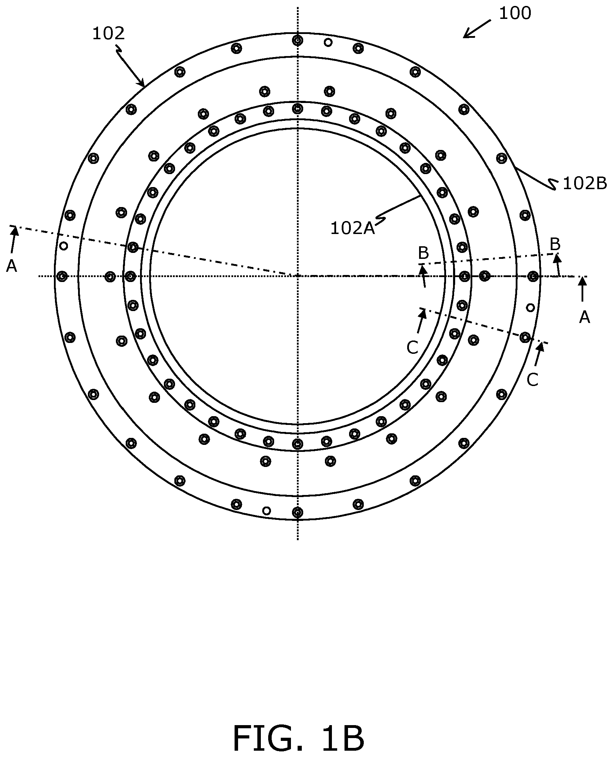

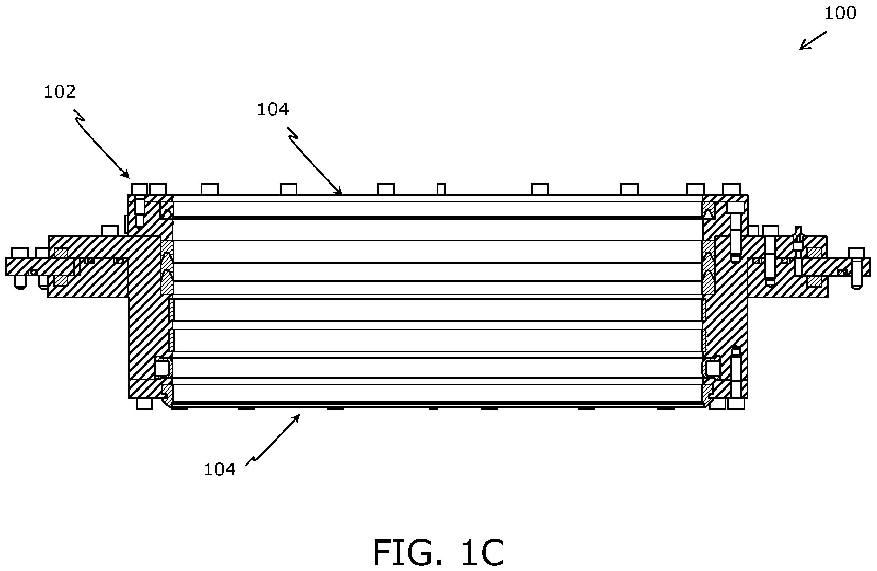

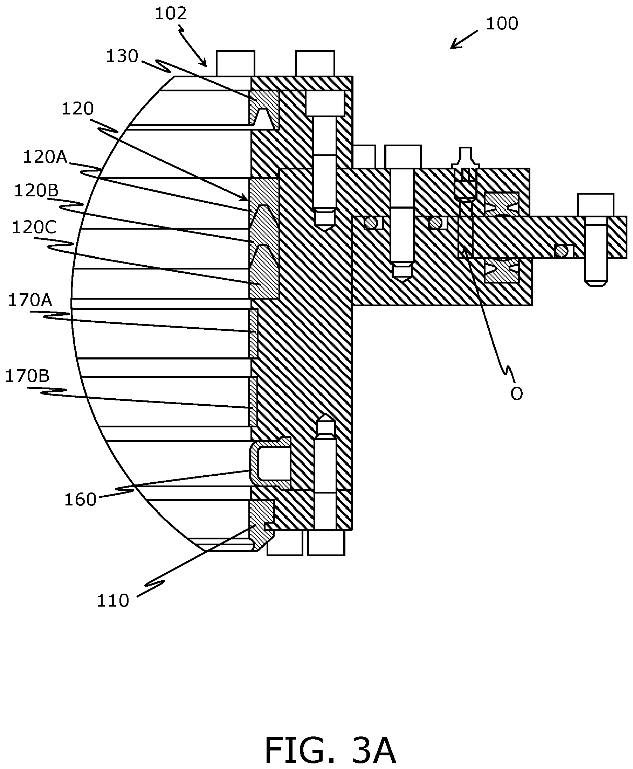

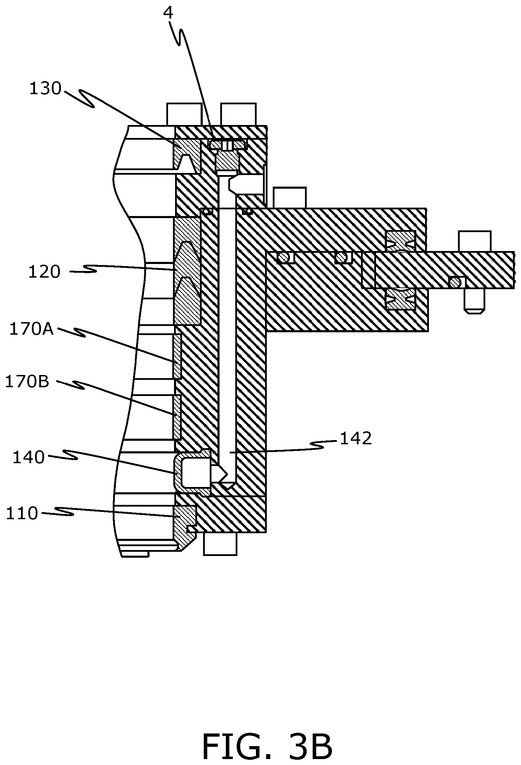

Referring to FIGs. 1B and 1C, illustrated are top and cross-sectional views, respectively, of the sealing assembly 100 of FIG. 1A, in accordance with one or more embodiments of the present disclosure. Herein, three different pre-defined axes, namely, A-A, B-B, C-C are selected for effectively demonstrating the internal components of the sealing assembly 100. Specifically, FIGs. 1C and 3A are illustrated with respect to the axis A-A, FIG. 3B is illustrated with respect to the axis B-B, and FIG. 1A is illustrated with respect to the axis C-C.

Referring to FIG. 1B, illustrated is a top view of the annular sealing housing 102 of the sealing assembly 100, in accordance with another embodiment of the present disclosure. As shown, the annular sealing housing 102 comprises a cylindrical structure having an inner radial side 102A and an outer radial side 102B, such that at least one of the first sealing layer 110, the second sealing layer 120, and the third sealing layer 130, are implemented in conjunction with the inner radial side 102A of the annular sealing housing 102 and along the outer circumference of the stem tube.

Referring to FIG. 1C, illustrated is a cross-sectional view of the annular sealing housing 102 of the sealing assembly 100 with respect to the axis A-A, in accordance with an embodiment of the present disclosure. As shown, the annular sealing housing 102 has a ring-shaped structure with openings 104 at each end for accommodating the stem tube implemented within the retractable thruster system.

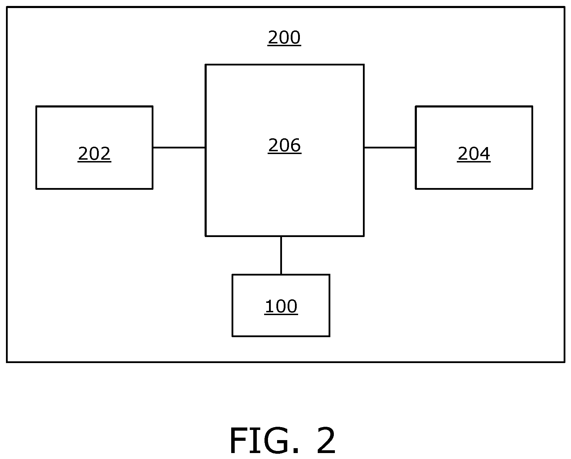

Referring to FIG. 2, illustrated is a block diagram of a retractable thruster system 200 implementing the sealing system 100, in accordance with one or more embodiments of the present disclosure. As shown, the retractable thruster system 200 comprises a thruster assembly 202 for providing thrusting force(s). The retractable thruster system 200 further comprises a driver assembly 204 for providing power, and a stem tube 206 operatively coupled with the thruster assembly 202 and the driver assembly 204. The retractable thruster system 200 further comprises a sealing assembly 100 (of FIGs. 1A to 1C).

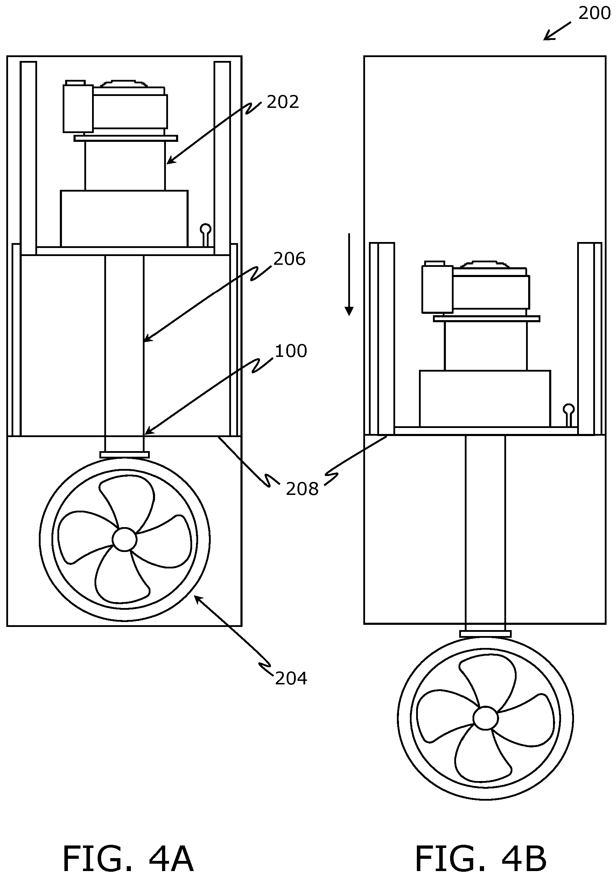

Referring to FIGs. 3A and 3B, illustrated are cross-sectional views of the annular sealing housing 102 of the sealing assembly 102 with respect to the axes B-B, and C-C, respectively, in accordance with one or more embodiments of the present disclosure. As shown, the sealing assembly 100 further comprises at least two locating ring seals 170A, 170B, arranged simultaneously, configured to maintain radial alignment of the annular sealing housing 102 with respect to the stem tube 206. Herein, the sealing assembly 100 may be detachably coupled with a closure plate (later shown in FIGs. 4A and 4B). Further, the sealing assembly 100 is separated from the closure plate via a gap (O) to accommodate horizontal translation of the stem tube 206. Furthermore, the fourth sealing layer 140 is connected to an inflatable channel 142 for transferring fluid therefrom, and wherein the transferred fluid includes at least one of compressed air, a fluid lubricant.

Referring to FIGs. 4A and 4B, illustrated is an exemplary schematic diagram of an exemplary retractable thruster system 200 in different positional configurations, in accordance with an embodiment of the present disclosure. Herein, FIG. 4A illustrates a contracted embodiment of the retractable thruster system 200, whereas FIG. 4B illustrates a retracted embodiment. As shown, the retractable thruster system 200 comprises a thruster assembly 202 for providing thrusting force(s). The retractable thruster system 200 further comprises a driver assembly 204 for providing power, and a stem tube 206 operatively coupled with the thruster assembly 202 and the driver assembly 204. The retractable thruster system 200 further comprises a sealing assembly 100 (of FIGs. 1A to 1C). Moreover, the sealing assembly 100 is detachably coupled with a closure plate 208. Optionally, the sealing assembly 100 is separated from the closure plate 208 via a gap (O) to accommodate horizontal translation of the stem tube 206.

## Claims

1. A sealing assembly (100) for a stem tube (206) implemented in a retractable thruster system (200), the sealing assembly comprising:
- an annular sealing housing (102), arranged concentrically in a floating manner to enable radial movement, around the stem tube (206), comprising:
- a first sealing layer (110), arranged at an opening (104) of the annular sealing housing, configured to prevent marine growth and fluid ingress;
- a second sealing layer (120), arranged after the first sealing layer, configured to form a water-tight seal against the stem tube;
- a third sealing layer (130), arranged after the second sealing layer, configured to accommodate relative movement of the stem tube;
- a fourth sealing layer (140), arranged between the first sealing layer and the second sealing layer, configured to be inflated for providing a temporary sealing barrier; and
- a drainage channel (150), arranged between the first sealing layer and the second sealing layer, configured to provide a dedicated path for removal of fluid ingress from the annular sealing housing, and
wherein the second sealing layer (120) includes a multi-layered chevron seal.

2. The sealing assembly (100) of claim 1, wherein the fourth sealing layer (140) is connected to an inflatable channel (142) for transferring fluid therefrom, and wherein the transferred fluid includes at least one of compressed air, a fluid lubricant.

3. The sealing assembly (100) of claims 1 or 2, wherein the second sealing layer (120) comprises a plurality of internal seals (120A, 120B, 120C) configured to allow one or more (120A) of the plurality of internal seals to be replaced while remaining (120B, 120C) of the plurality of internal sealing layers are operational.

4. The sealing assembly (100) of claim 3, wherein each of the plurality of internal seals (120A, 120B, 120C) of the second sealing layer (120) comprises at least two protruded lips (X, Y) having a height (h) and separated by a distance (d) to accommodate incoming protruded lips of one or more internal seals (120B, 120C, or 120A, 120C, or 120A, 120B) of the plurality of internal seals in order to form an interlocking seal configuration.

5. The sealing assembly (100) of claim 1, wherein the first sealing layer (110) includes a scraper seal, and wherein the scraper seal is made using at least one of Polyurethanes, Ultra-High Molecular Weight Polyethylene (UHMWPE), a metal having wear-resisting coating.

6. The sealing assembly (100) of claim 1, wherein the third sealing layer (130) includes a lip seal.

7. The sealing assembly (100) of any of the preceding claims, wherein the annular sealing housing (102) comprises a cylindrical structure having an inner radial side (102A) and an outer radial side (102B), such that at least one of:
- the first sealing layer (110),
- the second sealing layer (120), and
- the third sealing layer (130), are implemented in conjunction with the inner radial side (102A) of the sealing housing and along the outer circumference of the stem tube.

8. The sealing assembly (100) of any of the preceding claims, further comprises a collection tank, mechanically coupled with the drainage channel (150), configured to collect the fluid ingress therein.

9. The sealing assembly (100) of any of the preceding claims, further comprises a monitoring system operatively coupled with one or more sensors arranged on, or within, the annular sealing housing, and configured to monitor at least one of a pressure level within the annular sealing housing (102), or a fluid level within the collection tank.

10. The sealing assembly (100) of any of the preceding claims, further comprises a discharge system, operatively coupled with the collection tank, configured to pump the fluid ingress from the collection tank.

11. The sealing assembly (100) of any of the preceding claims, wherein the annular sealing housing (102) further comprises at least two locating ring seals (170A, 170B), arranged simultaneously, configured to maintain radial alignment of the annular sealing housing with respect to the stem tube.

12. A retractable thruster system (200), comprising:
- a thruster assembly (202);
- a driver assembly (204);
- a stem tube (206) operatively coupled with the thruster assembly (202) and the driver assembly (204); and
- a sealing assembly (100) as claimed in any one of the preceding claims.

13. The retractable thruster system (200) of claim 12, wherein the sealing assembly (100) is detachably coupled with a closure plate (208).

14. The retractable thruster system (200) of claim 12 or 13, wherein the sealing assembly (100) is separated from the closure plate (208) via a gap (O) to accommodate horizontal translation of the stem tube (206).

15. The retractable thruster system (200) of claim 14, wherein the driver assembly (204) is a main driver assembly.
